# EUROPÄISCHE PATENTANMELDUNG

(11) **EP 4 495 652 A1**
(43) Veröffentlichungstag der Anmeldung: **22.01.2025**
(21) Anmeldenummer: 23186795.3
(22) Anmeldetag: 20.07.2023
(51) Int. Cl.: G02B 6/44

(54) **KASSETTENHALTER FÜR SPLEISSKASSETTEN**

(71) Anmelder: ZVK GmbH, 94244 Teisnach (DE)
(72) Erfinder: Zellner, Joachim, 94269 Rinchnach (DE)
(74) Vertreter: Farago-Schauer, Peter Andreas

(57) **Zusammenfassung**

Die vorliegende Erfindung betrifft einen Kassettenhalter (1) für Spleißkassetten (S), der Kassettenhalter (1) umfassend: eine Basis (2), wobei die Basis (2) eine Längsachse (X) und eine Querachse (Y) hat, wobei die Basis (2) Führungsmittel (3a, 3b) für eine Führung von Lichtwellenleitern (4a, 4b) aufweist, mindestens ein modulares Bauteil (5), wobei das modulare Bauteil (5) mindestens zwei Kassettenaufnahmen (6) aufweist, wobei die Kassettenaufnahmen (6) jeweils zur Aufnahme einer Spleißkassette (S) ausgebildet sind, sodass die jeweilige Spleißkassette (S) in einem in der Kassettenaufnahme (6) angebrachten Zustand schwenkbar ist, wobei die Kassettenaufnahmen (6) eine Schwenkachse mit zugehörigem Schwenkbereich bereitstellen, wobei die Schwenkachse parallel zu der Längsachse (X) der Basis (2) ausgerichtet ist, wobei das modulare Bauteil (5) mittels eines Haltemittels (7) lösbar an der Basis (2) befestigt ist, um eine Austauschbarkeit des modularen Bauteils (5) bereitzustellen.

## Beschreibung

Die Erfindung betrifft einen Kassettenhalter für Spleißkassetten sowie ein System aus einem Kassettenhalter und mindestens einer Spleißkassette.

Im Stand der Technik, wie beispielsweise in der DE 10 2019 121 479 A1 offenbart, ist es bekannt, dass in sogenannten Spleißkassetten zwei oder mehr Lichtwellenleiter geführt, miteinander verbunden und aufgeteilt werden können. Die Spleißkassetten sind insbesondere wiederum in Kassettenhaltern angeordnet, welche eine enge Bestückung mit Spleißkassetten darauf erlauben. Es ist ferner bekannt, dass die Spleißkassetten in dem Kassettenhalter verschwenkt werden können und meist eine jeweilige Spleißkassette an der benachbarten Spleißkassette anliegt. Wenn nun eine Bestückung der Spleißkassetten mit Lichwellenleitern oder eine Änderung der Konfiguration der Lichtwellenleiter durchgeführt werden soll, kann es häufig passieren, dass eine Vielzahl von Spleißkassetten bewegt werden muss, um zur gewünschten Spleißkassette zu gelangen. Dabei kann es vermehrt zu Beschädigungen an der Befestigung der Spleißkassetten in den Kassettenhaltern kommen. Auch können die Befestigungen, die zusammen mit den Spleißkassetten in Netzverteilern oder Hauptverteilern untergebracht werde, aufgrund von äußeren Einflüssen, wie etwa Temperaturschwankungen der dergleichen, beschädigt werden. Darüber hinaus können Spleißkassetten, die aus Kunststoffmaterialien ausgebildet sind, durch Umwelteinflüsse altern und brüchig werden. Ein Austausch der Befestigung gestaltet sich jedoch schwierig, da meist ein zusammenhängendes Bauteil vorgesehen ist, welches als Ganzes ausgetauscht werden muss.

Der hier vorliegenden Erfindung liegt daher die Aufgabe zugrunde, dem Stand der Technik eine Verbesserung oder eine Alternative zur Seite zu stellen. Insbesondere soll die vorliegende Erfindung eine weniger aufwendige Reparatur des Kassettenhalters durch eine modulare Bauweise ermöglichen.

Nach einem ersten Aspekt löst die gestellte Aufgabe ein Kassettenhalter für Spleißkassetten, welcher eine Basis umfasst, wobei die Basis eine Längsachse und eine Querachse hat, wobei die Basis Führungsmittel für eine Führung von Lichtwellenleitern aufweist. Ferner weist der Kassettenhalter mindestens ein modulares Bauteil auf, wobei das modulare Bauteil mindestens zwei Kassettenaufnahmen aufweist. Die Kassettenaufnahmen sind dabei jeweils zur Aufnahme einer Spleißkassette ausgebildet, sodass die jeweilige Spleißkassette in einem in der Kassettenaufnahme angebrachten Zustand schwenkbar ist. Die Kassettenaufnahmen stellen eine Schwenkachse mit zugehörigem Schwenkbereich bereit, wobei die Schwenkachse parallel zu der Längsachse der Basis ausgerichtet ist. Das modulare Bauteil ist ferner mittels eines Haltemittels lösbar an der Basis befestigt, um eine Austauschbarkeit des modularen Bauteils bereitzustellen.

Begrifflich sei hierzu folgendes erläutert:
Es sei ausdrücklich darauf hingewiesen, dass im Rahmen der hier vorliegenden Patentanmeldung unbestimmte Artikel und unbestimmte Zahlenangaben wie "ein...", "zwei..." usw. im Regelfall als mindestens-Angaben zu verstehen sein sollen, also als "mindestens ein...", "mindestens zwei..." usw., sofern sich nicht etwa aus dem Kontext oder dem konkreten Text einer bestimmten Stelle ergibt, dass etwa dort nur "genau ein...", "genau zwei..." usw. gemeint sein soll. Weiterhin sind alle Zahlenangaben sowie Angaben zu Verfahrensparametern und/oder Vorrichtungsparametern im technischen Sinne zu verstehen, d.h. als mit den üblichen Toleranzen versehen zu verstehen. Auch aus der expliziten Angabe der Einschränkung "wenigstens" oder "mindestens" o.ä. darf nicht geschlossen werden, dass bei der einfachen Verwendung von "ein", also ohne die Angabe von "wenigstens" o.ä., ein "genau ein" gemeint ist.

Ein Kassettenhalter im Rahmen der vorliegenden Erfindung dient insbesondere dazu, eine Vielzahl von Lichtwellenleiter organisiert zu führen und zu verbinden. Dafür werden auf dem Kassettenhalter Spleißkassetten aufgebracht, in denen jeweils mindestens ein Lichtwellenleiter mit einem oder mehreren weiteren Lichtwellenleitern verbunden oder in zwei oder mehrere Lichtwellenleiter aufgeteilt werden kann. Ein erfindungsgemäßer Kassettenhalter findet beispielsweise in Netzverteilern oder Hauptverteilern Anwendung. Die Längs- und die Querachse der Basis liegen senkrecht zueinander und kreuzen sich in einem geometrischen Mittelpunkt der Basis. Die Längsachse und die Querachse liegen jeweils parallel zu einer Kante der Basis. Mit dem Begriff "lösbar" ist bevorzugt eine Verbindung des modularen Bauteils mittels des Haltemittels an der Basis gemeint, welche ohne Beschädigung der Basis, des modularen Bauteils und des Haltemittels und ferner ohne Zerstörung von möglichen Hilfsfügeteilen wieder gelöst werden kann. Unter die lösbaren Verbindungen fallen allgemein beispielsweise Schraub-, Klemm-, Rast- oder Klettverbindungen. Der "angebrachte Zustand" beschreibt insbesondere, dass dabei eine Spleißkassette an einer der Kassettenaufnahmen befestigt vorliegt. Auch bei der Kassettenaufnahme ist vorzugsweise eine lösbare Befestigung der Spleißkassetten bereitgestellt, beispielsweise als Schnapp- oder Rastverbindung.

Es ist vorteilhaft, wenn die Kassettenaufnahmen zur Aufnahme einer Achse der jeweiligen Spleißkassette ausgebildet sind. Es ist denkbar, dass die Achse der jeweiligen Spleißkassette an zwei oder mehr Punkten in den Kassettenaufnahmen angebracht ist. In anderen Worten sind die Kassettenaufnahmen insbesondere als Paare von jeweils mindestens zwei Elementen ausgebildet, welche die Achse der jeweiligen Spleißkassette im angebrachten Zustand halten.

Nach einem weiteren Beispiel weist die Basis einen Aufnahmeabschnitt auf, wobei der Aufnahmeabschnitt ausgebildet ist, um mindestens zwei modulare Bauteile lösbar entlang der Querachse der Basis in dem Aufnahmeabschnitt anzuordnen. Der Aufnahmeabschnitt kann als Vertiefung in der Basis ausgebildet sein, sodass das jeweilige modulare Bauteil im Wesentlichen formschlüssig in den Aufnahmeabschnitt einsetzbar ist. Der Aufnahmeabschnitt kann sich über eine gesamte Länge oder nur über einen Teilbereich der Basis erstrecken.

Zudem ist denkbar, dass der Aufnahmeabschnitt in Bezug auf die Längsachse mittig in der Basis angeordnet ist. Ferner ist eine Erstreckung des Aufnahmeabschnitts entlang der Querachse der Basis bevorzugt. Alternativ dazu ist auch eine von der Mitte der Basis abgesetzte Anordnung denkbar.

Es ist möglich, dass die Führungsmittel jeweils auf beiden Seiten des Aufnahmeabschnitts auf der Basis ausgebildet sind. Alternativ kann auch nur eine Ausbildung der Führungsmittel auf einer Seite des Aufnahmeabschnitts gegeben sein, wobei erfindungsgemäß eine zweiseitige Ausbildung bevorzugt ist.

Es kann vorgesehen sein, dass die Kassettenaufnahmen als jeweilige elastische Raststellen zur Arretierung und schwenkbaren Halterung einer jeweiligen Spleißkassette ausgebildet sind. Die elastischen Raststellen liegen im Rahmen der vorliegenden Erfindung vorzugsweise nach einem Lösen einer Spleißkassette aus der elastischen Raststelle unbeschädigt vor, um ein erneutes Befestigen einer Spleißkassette zu ermöglichen. Mit Arretierung ist synonym eine Halterung, bzw. Befestigung der jeweiligen Spleißkassette zu verstehen.

Ferner kann jede elastische Raststelle mit zwei gegenüberstehenden Nasen ausgebildet sein, die jeweilige Anliegeflächen aufweisen, um den Schwenkbereich einer benachbarten Spleißkassette zu begrenzen. Demnach wird der Schwenkbereich einer Spleißkassette in beide Schwenkrichtungen dadurch begrenzt, dass die Spleißkassette an der Anliegefläche von einer der jeweils benachbarten elastischen Raststellen anliegt. Unter den Begriff "Nasen" fallen erfindungsgemäß beispielsweise Schnapphaken. Theoretisch denkbar wäre auch eine Verbindung der Spleißkassette mit der Kassettenaufnahme über eine Ringschnappverbindung oder eine Kugelgelenkverbindung.

Außerdem ist möglich, dass das mindestens ein modulares Bauteil sowie die Basis zueinander komplementäre Aussparungen aufweisen und wobei das lösbare Haltemittel als Schraubverbindung ausgebildet ist. So liegen die komplementären Aussparungen des modularen Bauteils sowie der Basis in dem angebrachten Zustand vorzugsweise übereinander, sodass eine Schraube durch die komplementären Aussparungen geführt werden kann, um das modulare Bauteil lösbar an der Basis zu befestigen. Es kann vorgesehen sein, dass eine oder beide der Aussparungen ein Gewinde aufweisen, welches ein Gegenstück zu einer für die Befestigung verwendete Schraube darstellt. Alternativ kann eine jeweilige Befestigung mit einer Schraube und einer Mutter vorgesehen sein.

In einer möglichen Ausführungsform umfassen die Führungsmittel ein erstes Führungsmittel und ein zweites Führungsmittel, die symmetrisch um die Querachse angeordnet sind. Die Lichtwellenleiter umfassen hierbei einen ersten Lichtwellenleiter und einen zweiten Lichtwellenleiter. Ferner umfasst das erste Führungsmittel vorzugsweise ein erstes Ausleitelement mit einem ersten Ausleitkanal und/oder einen ersten Führungsstift mit einem ersten Führungskanal und/oder einen ersten Niederhalter mit einem ersten Niederhalterkanal. Die ersten Kanäle sind insbesondere für die Führung eines ersten Lichtwellenleiters ausgebildet. Zusätzlich oder alternativ kann das zweite Führungsmittel ein zweites Ausleitelement mit einem zweiten Ausleitkanal und/oder einen zweiten Führungsstift mit einem zweiten Führungskanal und/oder einen zweiten Niederhalter mit einem zweiten Niederhalterkanal umfassen, wobei die zweiten Kanäle für die Führung eines zweiten Lichtwellenleiters ausgebildet sind. Ein Ausleitkanal ist insbesondere jeweils zwischen zwei Ausleitelementen beschrieben. Ein Führungskanal ist insbesondere jeweils zwischen zwei Führungsstiften beschrieben. Ein Niederhalterkanal ist insbesondere als Kanal zu verstehen, welcher unter dem mindestens einen Niederhaltern hindurchläuft.

Zudem ist denkbar, dass der Kassettenhalter eine Vielzahl von modularen Bauteilen aufweist, die vorzugsweise eine unterschiedliche Erstreckung entlang der Querachse haben. Ein technischer Effekt, welcher sich aus den unterschiedlichen Längen der einzelnen modularen Bauteile ergibt, ist eine individuelle Konfigurierbarkeit des Kassettenhalters. So können Bereiche des Kassettenhalters, welche besonders anfällig für Beschädigungen sind, beispielsweise durch eine hohe mechanische Belastung und/oder Temperatur und/oder eine häufige Konfigurationsänderung der Lichtwellenleiter in diesem Bereich, mit kürzeren modularen Bauteilen ausgestattet werden. Auch können verschiedene Modelle von Spleißkassetten unterschiedliche Einflüsse auf die Kassettenaufnahmen haben und durch entsprechende Längen der modularen Bauteile berücksichtigt werden.

Nach einem zweiten Aspekt der Erfindung löst die gestellte Aufgabe ein System aus einem erfindungsgemäßen Kassettenhalter und mindestens einer Spleißkassette.

Die Erfindung sei nachstehend anhand von Ausführungsbeispielen unter Bezugnahme auf die Zeichnungen näher erläutert. Dort zeigen
- Fig. 1: eine mögliche Ausführungsform des erfindungsgemäßen Kassettenhalters sowie eine Spleißkassette, worin die Spleißkassette vom Kassettenhalter gelöst ist,
- Fig. 2: die Spleißkassette der Fig. 1, worin die Spleißkassette am Kassettenhalter der Fig. 1 schwenkbar angebracht ist,
- Fig. 3: einen vergrößerten Ausschnitt auf die an dem Kassettenhalter angebrachte Spleißkassette aus Fig. 2,
- Fig. 4: eine allgemeine Ansicht einer Anordnung, worin eine Vielzahl von Spleißkassetten an einem Kassettenhalter schwenkbar angebracht sind.

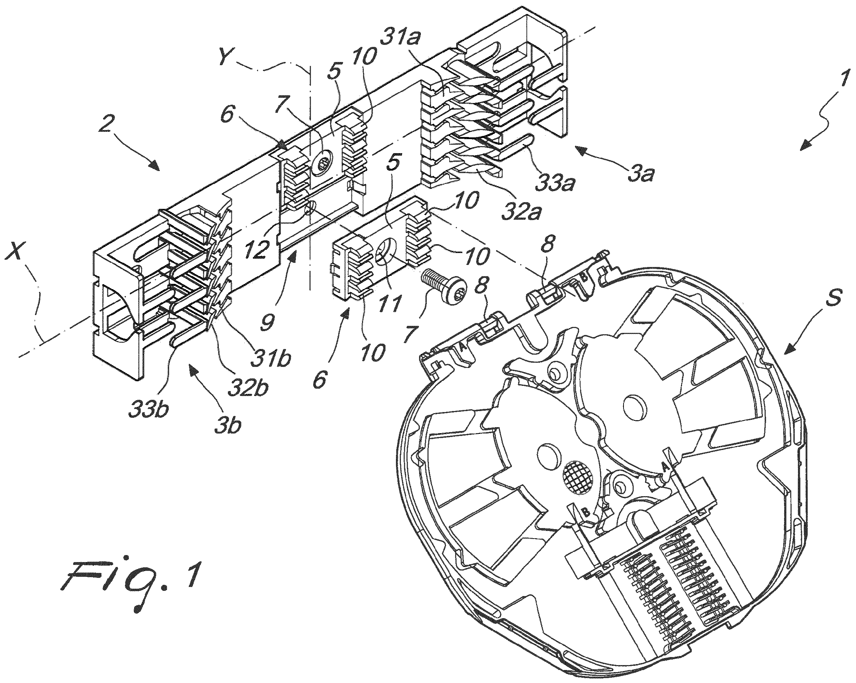

Der Kassettenhalter 1 gemäß der vorliegenden Erfindung sei nachstehend zunächst anhand der Figuren 1 bis 3 beschrieben.

Der Kassettenhalter 1 weist eine Basis 2 auf, welche wiederum eine Längsachse X und eine Querachse Y hat. Ferner umfasst der Kassettenhalter 1 in dieser Ausführungsform zwei modulare Bauteile 5, wobei in Fig. 1 eines der modularen Bauteile 5 lösbar an der Basis 2 befestigt ist. Erfindungsgemäß kann die Anzahl der modularen Bauteile 5 und/oder die Erstreckung des Kassettenhalters 1 und/oder die Erstreckung der einzelnen modularen Bauteile 5 in Richtung der Querachse Y variieren.

In der Ausführungsform nach Fig. 1 weist die Basis 2 einen Aufnahmeabschnitt 9 auf, in welchen die modularen Bauteile 5 eingeführt werden können. Die modularen Bauteile 5 sind jeweils mittels eines Haltemittels 7 lösbar an der Basis 2 befestigbar.

Diesbezüglich ist in dieser Ausführungsform eine Schraubverbindung vorgesehen. So weisen jeweils die Basis 2 und die modularen Bauteile 5 komplementäre Aussparungen 11, 12 auf, durch welche eine Schraube geführt werden kann, um die modularen Bauteile 5 an der Basis 2 zu befestigen. Eine oder beide der Aussparungen 11, 12 können ein Gewinde aufweisen, welches zu der verwendeten Schraube passt. Alternativ oder zusätzlich kann jeweils eine Mutter vorgesehen sein, welche zu der verwendeten Schraube passt. Das Haltemittel 7 kann alternativ als Klemm-, Rast- oder Klettverbindung oder dergleichen ausgestaltet werden, sofern die Lösbarkeit, wie vorstehend definiert, gewährleistet wird. In einer weiteren Alternative kann eine (nicht dargestellte) Trägerplatte vorgesehen werden, die unterhalb der Basis 2 angeordnet ist. Die Trägerplatte ist vorzugsweise als Bech ausgebildet, so dass die modularen Bauteile 5 an der Trägerplatte in bekannter Weise, beispielsweise durch Vernieten, Verschrauben, Klemmen usw., befestigbar sind.

In dieser Ausführungsform sind die modularen Bauteile 5 mittig in Bezug auf die Längsachse X auf der Basis 2 angeordnet und erstrecken sich übereinander entlang der Querachse Y.

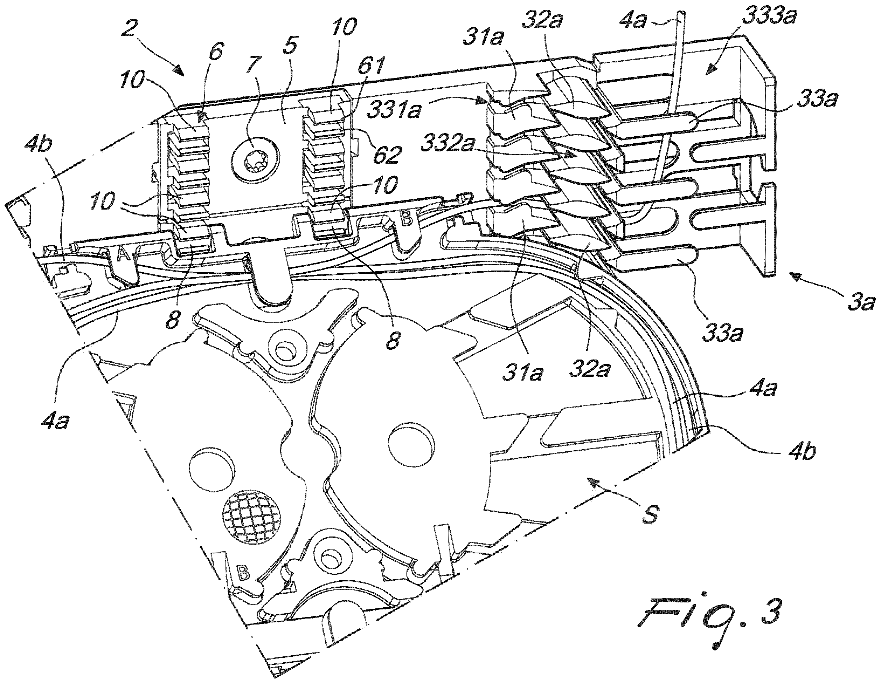

Ferner sind in dieser Ausführungsform auf beiden Seiten der modularen Bauteile 5 Führungsmittel 3a und 3b angeordnet. Die Führungsmittel 3a und 3b umfassen hierbei jeweils Ausleitelemente 31a und 31b mit Ausleitkanälen 331a und 331b, Führungsstifte 32a und 32b mit Führungskanälen 332a und 332b und Niederhalter 33a und 33b mit Niederhalterkanälen 333a und 333b. Die Kanäle 331a, 332a und 333a sowie 331b, 332b und 333b sind vergrößert in Fig. 3 zu sehen.

Die modularen Bauteile 5 weisen wiederum jeweils Kassettenaufnahmen 6 auf. In die Kassettenaufnahmen 6 wird hier jeweils eine Achse 8 einer Spleißkassette S eingebracht, um die Achse 8 in der Kassettenaufnahme 6 schwenkbar zu befestigen. Wenn die Spleißkassette S in der Kassettenaufnahme 6 vorliegt, kann die Spleißkassette S demnach um eine Schwenkachse, die mit der Achse 8 zusammenfällt, geschwenkt werden.

In dieser Ausführungsform sind die Kassettenaufnahmen 6 als elastische Raststellen 61, 62 als jeweils zwei gegenüberstehende Nasen ausgebildet. Dies ist besonders in der vergrößerten Darstellung in Fig. 3 sichtbar. An der Rückseite jeder Nase der Kassettenaufnahme 6 liegt eine Anliegefläche 10 vor. Der Schwenkbereich einer jeweils in der Kassettenaufnahme 6 angebrachten Spleißkassette S wird demnach in beide Richtungen durch die benachbarten Anliegeflächen 10 der elastischen Raststellen 61, 62 begrenzt.

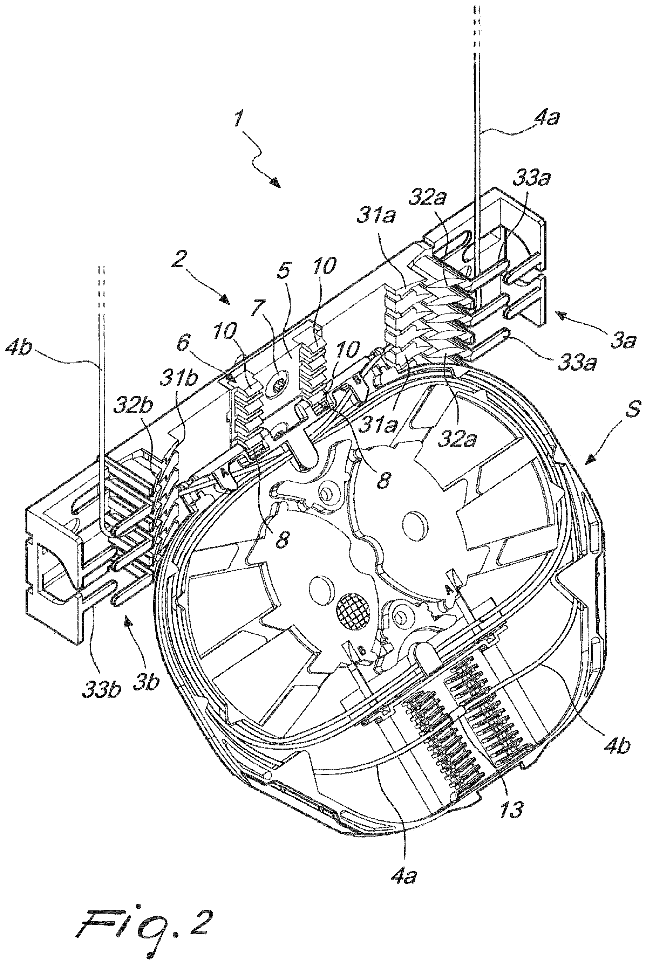

Fig. 2 zeigt den erfindungsgemäßen Kassettenhalter 1 der Fig. 1, wobei eine Spleißkassette S dieser Figur in einer Kassettenaufnahme 6 des Kassettenhalters 1 angebracht ist. Die Kassettenaufnahme 6 ist, analog zu der Ausführungsform gemäß Fig. 1, auf dem modularen Bauteil 5 angeordnet, welches wiederum lösbar auf der Basis 2 des Kassettenhalters 1 befestigt ist. Wie ferner zu sehen, ist ein erster Lichtwellenleiter 4a durch die Spleißkassette S geführt. Der erste Lichtwellenleiter 4a geht dabei vor der Spleißkassette S durch das erste Führungsmittel 3a (rechtes Führungsmittel wie in den Figuren dargestellt) auf der Basis 2, beginnend beim ersten Niederhalterkanal 333a unter den ersten Niederhaltern 33a, weiter durch ersten den Führungskanal 332a zwischen den ersten Führungsstiften 32a und endlich durch den ersten Ausleitkanal 331a zwischen den ersten Ausleitelementen 31a. Der erste Lichtwellenleiter 4a kann als einzelne optische Faser ausgebildet sein oder als ein Bündel von optischen Fasern, die durch eine entsprechende Ummantelung geführt werden, wie im Stand der Technik wohl bekannt.

Nach der Spleißkassette S geht ein zweiter Lichtwellenleiter 4b, der mit dem ersten Lichtwellenleiter 4a in herkömmlicher Weise gespleißt werden kann, durch das zweite Führungsmittel 3b (linke Führungsmittel wie in Fig. 2 dargestellt) auf der Basis 2 in umgekehrter Reihenfolge zu der voranstehend beschriebenen Reihenfolge durch die ersten Führungsmittel 3a. Der zweite Lichtwellenleiter 4b kann ebenfalls als einzelne optische Faser ausgebildet sein oder als ein Bündel von optischen Fasern, die durch eine entsprechende Ummantelung geführt werden, wie im Stand der Technik wohl bekannt. Ein Spleißschutz 13 kann vorteilhaft an der Spleißstelle der Lichtwellenleiter 4a und 4b vorgesehen sein.

Die ersten und zweiten Führungsmittel 3a und 3b liegen in dieser Ausführungsform um die Querachse Y gespiegelt auf der Basis 2 vor.

Fig. 3 zeigt eine vergrößerte Ansicht von Fig. 2. Hier sind die ersten Kanäle 33 1a, 332a und 333a durch das erste Führungsmittel 3a zu sehen, durch welche der erste Lichtwellenleiter 4a geführt wird. Die zweiten in dieser Figur nicht dargestellten Kanäle 33 1b, 332b und 333b durch das zweite Führungsmittel 3b, durch welche jeweils der zweiten Lichtwellenleiter 4b geführt werden, sind analog ausgebildet. Erfindungsgemäß sind die Kanäle optional.

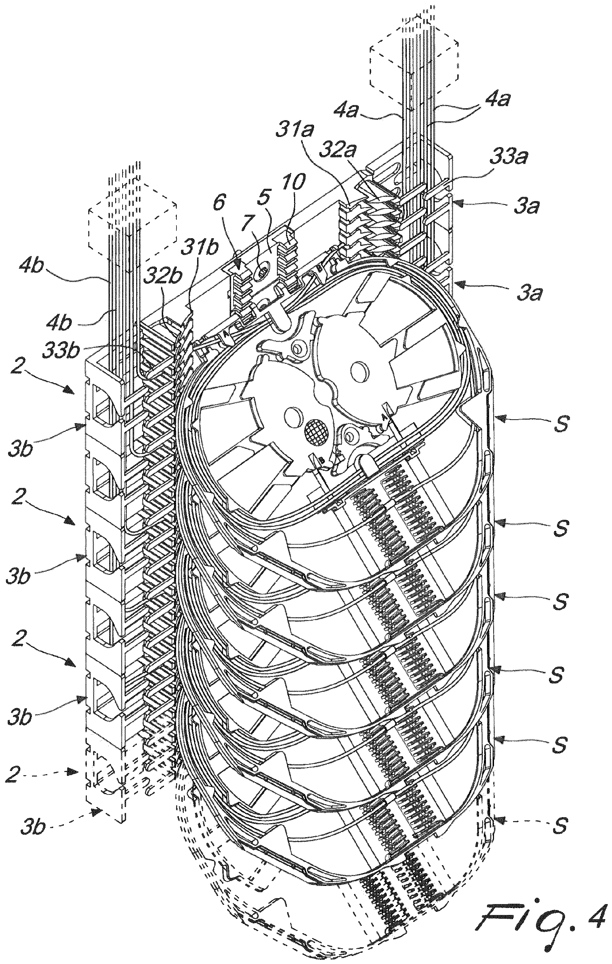

In Fig. 4 ist eine Ausführungsform des erfindungsgemäßen Kassettenhalters 1 dargestellt, in welchem eine Vielzahl von modularen Bauteilen 5 vorliegt. Ferner sind eine Vielzahl von Spleißkassetten S in den Kassettenaufnahmen 6 der modularen Bauteile 5 angebracht. Erfindungsgemäß kann der Kassettenhalter 1 eine Vielzahl vom Basen 2, wie in Fig. 4 dargestellt, umfassen. Allerdings kann eine Basis 2 erfindungsgemäß länger ausgebildet werden, so dass abweichend von der Fig. 4 beispielsweise die Basis 2 im Wesentlichen die volle Länge des Kassettenhalters 1 einnimmt. Ferner kann die Erstreckung der einzelnen modularen Bauteile 5 entlang der Querachse Y variieren.

Fig. 4 verdeutlicht nochmals die Problematik des Austausches von beschädigten Bauteilen, sofern diese nicht als erfindungsgemäße modulare (also von der Basis 2 trennbare) Bauteile 5 ausgebildet sind. Wie aus dieser Figur ersichtlich, nimmt eine Basis 2 oder eine Vielzahl von Basen, die koaxial an einer gemeinsamen Querachse Y angeordnet sind, eine Vielzahl von Spließkassetten S schwenkbar in den jeweiligen Kassettenaufnahmen 6 der modularen Bauteile 5 auf. Die Spließkassetten S mit der Basis 2 bzw. mit den Basen 2, sind in einem (hier nicht gezeigten) Netzverteiler oder Hauptverteiler untergebracht, wie etwa aus der EP 2 661 092 A1 bekannt, wobei der Verteiler an dieser Stelle nicht weiter beschrieben wird. Solche Netzverteiler oder Hauptverteiler sind ansonsten im Stand der Technik wohl bekannt und werden üblicherweise im Freien angebracht.

Im Falle der Beschädigung eines Kassettenhalters war es im Stand der Technik, wie etwa in der DE 10 2019 121 479 A1 offenbart, erforderlich, die komplette Basis auszutauschen, da die Kassettenhalter einstückig und nicht lösbar mit der Basis verbunden waren. Ein Austausch einer derartig ausgebildeten Basis war im Stand der Technik mit einem erheblichen Auswand verbunden, da in einem solchen bekannten Aufbau, die Lichtwellenleiter aus den jeweiligen mit der Basis einstückig oder nicht lösbar verbundenen Führungsmitteln hätten ebenfalls entfernt werden müssen, um eine neue Basis mit funktionierendem Kassettenhalter in den Verteiler einzubauen. Der Aufwand für die Entnahme der Lichtwellenleiter aus den Führungsmitteln des Standes der Technik war nicht unerheblich, zumal gängige Verteiler hunderte und sogar tausende Lichtwellenleiter aufnehmen können.

Gemäß der Lösung der vorliegenden Erfindung müssen lediglich die Spließkassetten S aus einem modularen Bauteil 5 mit der beschädigten Kassettenausnahme 6 entfernt und leicht angehoben werden, wobei die Lichtwellenleiter 4a und 4b in den jeweiligen Führungsmitteln 3a und 3b verbleiben können. Anschließend kann das modulare Bauteil 5 mit der beschädigten Kassettenaufnahme 6 von Basis 2 gelöst werden, und zwar durch die Lösung des Haltemittels 7 (beispielsweise der Schraube oder dergleichen). Nach dem Einsetzen und Befestigen eines neuen modularen Bauteils 5 können die entnommenen Spließkassetten S in die jeweiligen neuen Kassettenausnahmen 6 eingeführt und schwenkbar gelagert werden. Während dieses Vorgangs verweilen die Lichtwellenleiter 4a und 4b in den jeweiligen Führungsmitteln 3a und 3b, so dass sich erfindungsgemäß der Austausch einer beschädigten Kassettenausnahme 6 sehr simpel gestaltet.

Erfindungsgemäß hat sich erwiesen, dass ein modulares Bauteil 5 mit einer geringeren Anzahl an Kassettenausnahmen 6 vorteilhaft ist, da der Austauschaufwand bei einer beschädigten Kassettenausnahme 6 geringer ist. Vorteilhaft ist ein modulares Bauteil 5 mit beispielsweise vier oder weniger Kassettenausnahmen 6, insbesondere drei oder weniger Kassettenausnahmen 6 ausgestattet. Erfindungsgemäß hat sich auch erwiesen, dass modulare Bauteile 5 mit jeweils drei Kassettenausnahmen 6 wie in Fig. 1 dargestellt besonders vorteilhaft sind, da der Montage- und Demontageaufwand ausgewogen sind.

Zur Klarheit sei auch angemerkt, dass unbestimmte Artikel in Verbindung mit einem Gegenstand oder Zahlenangaben, wie beispielsweise "ein" Gegenstand, den Gegenstand nicht zahlenmäßig auf genau einen Gegenstand begrenzen, sondern dass mindestens "ein" Gegenstand damit gemeint ist. Dies gilt für alle unbestimmten Artikel wie beispielsweise "ein", "eine" usw.

Es versteht sich, dass, wenn ein Element als "auf" einem anderen Element angebracht, damit "verbunden", "gekoppelt" oder "in Kontakt" damit bezeichnet wird, das Element sich dann direkt auf dem anderen Element befinden, damit verbunden oder gekoppelt sein kann, oder dass außerdem dazwischenliegende Elemente vorhanden sein können, die entweder nur dazwischenliegen oder das Element mit dem anderen Element verbinden oder koppeln oder in Kontakt halten. Wenn hingegen ein Element als "direkt auf einem anderen Element, damit "direkt verbunden", "direkt gekoppelt" oder "direkt in Kontakt" bezeichnet wird, ist dies dahingehend zu verstehen, dass keine dazwischenliegenden Elemente vorhanden sind.

Obwohl die Ausdrücke "erstes", "zweites" usw. hierin verwendet werden können, um verschiedene Elemente, Komponenten, Bereiche und/oder Abschnitte zu bezeichnen, sind diese Elemente, Komponenten, Bereiche und/oder Abschnitte nicht durch diese Ausdrücke beschränkt. Die Ausdrücke werden nur verwendet, um ein Element, eine Komponente, einen Bereich oder Abschnitt von einem anderen Element, einer anderen Komponente, einem anderen Bereich oder Abschnitt zu unterscheiden. Daher kann ein erstes Element, eine erste Komponente, ein erster Bereich oder Abschnitt, die unten behandelt sind, als zweites Element, zweite Komponente, zweiter Bereich oder Abschnitt bezeichnet werden, ohne von den Lehren der vorliegenden Erfindung abzuweichen.

Ausführungsformen der Erfindung sind hierin mit Bezug auf Ansichten beschrieben, die schematische Darstellungen von Ausführungsformen der Erfindung sind. Daher kann sich die tatsächliche Dicke der Komponenten davon unterscheiden, und Abweichungen von den Formen in den Darstellungen, zum Beispiel aufgrund von Herstellungsverfahren und/oder Toleranzen, sind zu erwarten. Ausführungsformen der Erfindung sind nicht als auf die speziellen Formen der hierin dargestellten Bereiche beschränkt zu verstehen, sondern sollen Abweichungen der Formen einschließen, die zum Beispiel aus der Art der Herstellung resultieren. Ein Bereich, der als quadratisch oder rechteckig dargestellt oder bezeichnet ist, hat typischerweise auch gerundete oder gekrümmte Merkmale aufgrund normaler Herstellungstoleranzen. Daher sind die in den Figuren dargestellten Bereiche schematischer Art, und ihre Formen dienen nicht dazu, die genaue Form eines Bereichs einer Vorrichtung darzustellen oder den Schutzumfang der Erfindung zu beschränken.

Zum Ausdruck "umfassen" sei zur Klarheit gesagt, dass, wenn ein erster Vorrichtungsteil einen zweiten Vorrichtungsteil umfasst, dies bedeutet, dass der erste Vorrichtungsteil den zweiten Vorrichtungsteil "aufweist" und nicht notwendigerweise anordnungsmäßig umschließt, wenn es sich nicht beispielsweise um eine Beschreibung einer lagemäßigen und formenmäßigen Anordnung handelt; das Gleiche gilt für ein Verfahren, das einen oder mehrere Verfahrensschritte umfassen kann.

Weitere mögliche Ausbildungsformen sind in den folgenden Ansprüchen beschrieben. Insbesondere können auch die verschiedenen Merkmale der oben beschriebenen Ausführungsformen miteinander kombiniert werden, soweit sie sich nicht technisch ausschließen.

Die in den Ansprüchen genannten Bezugszeichen dienen nur der besseren Verständlichkeit und beschränken die Ansprüche in keiner Weise auf die in den Figuren dargestellten Formen.

Die hier gezeigten Ausführungsformen stellen nur Beispiele für die vorliegende Erfindung dar und dürfen daher nicht einschränkend verstanden werden. Alternative durch den Fachmann in Erwägung gezogene Ausführungsformen sind gleichermaßen vom Schutzbereich der vorliegenden Erfindung umfasst.

### Bezugszeichenliste

- 1: Kassettenhalter
- 2: Basis
- 3a: erstes Führungsmittel
- 3b: zweites Führungsmittel
- 4a: erster Lichtwellenleiter
- 4b: zweiter Lichtwellenleiter
- 5: modulares Bauteil
- 6: Kassettenaufnahme
- 61, 62: Raststelle
- 7: Haltemittel
- 8: Achse
- 9: Aufnahmeabschnitt
- 10: Anliegefläche
- 11, 12: Aussparung
- 13: Spleißschutz
- 31a: erstes Ausleitelement
- 31b: zweites Ausleitelement
- 331a: erstes Ausleitkanal
- 331b: zweites Ausleitkanal
- 32a: erster Führungsstift
- 32b: zweiter Führungsstift
- 332a: erster Führungskanal
- 332b: zweiter Führungskanal
- 33a: erstes Niederhalter
- 33b: zweiter Niederhalter
- 333a: erster Niederhalterkanal
- 333a: zweiter Niederhalterkanal
- 100: System
- S: Spleißkassette
- X: Längsachse
- Y: Querachse

## Patentansprüche

1. Kassettenhalter (1) für Spleißkassetten (S), der Kassettenhalter (1) umfassend:
eine Basis (2), wobei die Basis (2) eine Längsachse (X) und eine Querachse (Y) hat, wobei die Basis (2) Führungsmittel (3a, 3b) für eine Führung von Lichtwellenleitern (4a, 4b) aufweist,
mindestens ein modulares Bauteil (5), wobei das modulare Bauteil (5) mindestens zwei Kassettenaufnahmen (6) aufweist,
wobei die Kassettenaufnahmen (6) jeweils zur Aufnahme einer Spleißkassette (S) ausgebildet sind, sodass die jeweilige Spleißkassette (S) in einem in der Kassettenaufnahme (6) angebrachten Zustand schwenkbar ist, wobei die Kassettenaufnahmen (6) eine Schwenkachse mit zugehörigem Schwenkbereich bereitstellen, wobei die Schwenkachse parallel zu der Längsachse (X) der Basis (2) ausgerichtet ist,
wobei das modulare Bauteil (5) mittels eines Haltemittels (7) lösbar an der Basis (2) befestigt ist, um eine Austauschbarkeit des modularen Bauteils (5) bereitzustellen.

2. Kassettenhalter (1) nach Anspruch 1, wobei die Kassettenaufnahmen (6) zur Aufnahme einer Achse (8) der jeweiligen Spleißkassette (S) ausgebildet sind.

3. Kassettenhalter (1) nach Anspruch 1 oder 2, wobei die Basis (2) einen Aufnahmeabschnitt (9) aufweist, wobei der Aufnahmeabschnitt (9) ausgebildet ist, um mindestens zwei modulare Bauteile (5) lösbar entlang der Querachse (Y) der Basis (2) in dem Aufnahmeabschnitt (9) anzuordnen.

4. Kassettenhalter (1) nach Anspruch 3, wobei der Aufnahmeabschnitt (9) in Bezug auf die Längsachse (X) mittig in der Basis (2) angeordnet ist.

5. Kassettenhalter (1) nach Anspruch 3 oder 4, wobei die Führungsmittel (3a, 3b) jeweils auf beiden Seiten des Aufnahmeabschnitts (9) auf der Basis (2) ausgebildet sind.

6. Kassettenhalter (1) nach einem oder mehreren der voranstehenden Ansprüche, wobei die Kassettenaufnahmen (6) als jeweilige elastische Raststellen (61, 62) zur Arretierung und schwenkbaren Halterung einer jeweiligen Spleißkassette (S) ausgebildet sind.

7. Kassettenhalter (1) nach Anspruch 6, wobei jede elastische Raststelle (61, 62) mit zwei gegenüberstehenden Nasen ausgebildet ist, die jeweilige Anliegeflächen (10) aufweisen, um den Schwenkbereich einer benachbarten Spleißkassette (S) zu begrenzen.

8. Kassettenhalter (1) nach einem oder mehreren der voranstehenden Ansprüche, wobei das mindestens eine modulare Bauteil (5) sowie die Basis (2) zueinander komplementäre Aussparungen (11, 12) aufweisen und wobei das lösbare Haltemittel (7) als Schraubverbindung ausgebildet ist.

9. Kassettenhalter (1) nach einem oder mehreren der voranstehenden Ansprüche, wobei die Führungsmittel (3a, 3b) ein erstes Führungsmittel (3a) und ein zweites Führungsmittel (3b) umfassen, die symmetrisch um die Querachse (Y) angeordnet sind, und wobei die Lichtwellenleiter (4a, 4b) einen ersten Lichtwellenleiter (4a) und einen zweiten Lichtwellenleiter (4b) umfassen, wobei
das erste Führungsmittel (3a) ein erstes Ausleitelement (31a) mit einem ersten Ausleitkanal (331a,) und/oder einen ersten Führungsstift (32a) mit einem ersten Führungskanal (332a) und/oder einen ersten Niederhalter (33a) mit einem ersten Niederhalterkanal (333a) umfasst, wobei die ersten Kanäle (331a, 332a, 333a) für die Führung eines ersten Lichtwellenleiters (4a) ausgebildet sind, und/oder
das zweite Führungsmittel (3b) ein zweites Ausleitelement (31b) mit einem zweiten Ausleitkanal (331b) und/oder einen zweiten Führungsstift (32b) mit einem zweiten Führungskanal (332b) und/oder einen zweiten Niederhalter (33b) mit einem zweiten Niederhalterkanal (333b) umfasst, wobei die zweiten Kanäle (331b, 332b, 333b) für die Führung eines zweiten Lichtwellenleiters (4a, 4b) ausgebildet sind.

10. Kassettenhalter (1) nach einem oder mehreren der voranstehenden Ansprüche, wobei der Kassettenhalter (1) eine Vielzahl von modularen Bauteilen (5) aufweist, die vorzugsweise eine unterschiedliche Erstreckung entlang der Querachse (Y) haben.

11. System (100) aus einem Kassettenhalter (1) nach einem oder mehreren der voranstehenden Ansprüche und mindestens einer Spleißkassette (S).
